# EUROPEAN PATENT APPLICATION

(11) **EP 4 622 346 A1**
(43) Date of publication of application: **24.09.2025**
(21) Application number: 22967639.0
(22) Date of filing: 09.12.2022
(51) Int. Cl.: H04W 40/00

(54) **WIRELESS COMMUNICATION METHOD, TERMINAL DEVICE, AND RELAY NODE**

(71) Applicant: GUANGDONG OPPO MOBILE TELECOMMUNICATIONS CORP., LTD., Dongguan, Guangdong 523860 (CN)
(72) Inventor: ZHANG, Boyuan, Dongguan, Guangdong 523860 (CN); LU, Qianxi, Dongguan, Guangdong 523860 (CN); LENG, Bingxue, Dongguan, Guangdong 523860 (CN)
(74) Representative: Novagraaf Technologies
(86) International application number: PCT/CN2022/138002
(87) International publication number: WO 2024/119491

(57) **Abstract**

A wireless communication method, a terminal device, and a relay node. The method comprises: a first terminal selecting a target relay node from at least one relay node, the at least one relay node being a relay node in a network, and relay nodes deployed in the network communicating via direct connection or relay connection; and the first terminal establishing a connection with the target relay node.

## Description

### TECHNICAL FIELD

Embodiments of the present disclosure relate to the field of communications, and in particular, relates to a method for wireless communication, and a terminal device and a relay node thereof.

### RELATED ART

In related arts, a remote terminal may communicate with other devices (such as other terminals or network devices) over a relay terminal. With development of communication systems, various network environments coexist. In this case, how to perform relay communication to improve data transmission efficiency is an urgent problem to be resolved.

### SUMMARY

The present disclosure provides a method for wireless communication, and a terminal device and a relay node thereof, which are conducive to improving the transmission efficiency.

In a first aspect, a method for wireless communication is provided. The method is applicable to a first terminal. The method includes: selecting a target relay node from at least one relay node, wherein the at least one relay node is at least a portion of relay nodes deployed in a network, the relay nodes deployed in the network being configured to communicate with each other over direct connections or relay-based connections; and establishing a connection between the first terminal and the target relay node.

In a second aspect, a method for wireless communication is provided. The method is applicable to a target relay node. The method includes: establishing a connection between the target relay node and a first terminal, wherein the target relay node is one of relay nodes deployed in a network, the relay nodes deployed in the network being configured to communicate with each other over direct connections or relay-based connections.

In a third aspect, a terminal device is provided. The terminal device is configured to perform the method for wireless communication according to the first aspect or embodiments thereof.

Specifically, the terminal device includes functional modules configured to perform the method for wireless communication according to the first aspect or embodiments thereof.

In a fourth aspect, a network device is provided. The network device is configured to perform the method for wireless communication according to the second aspect or embodiments thereof.

Specifically, the network device includes functional modules configured to perform the method for wireless communication according to the second aspect or embodiments thereof.

In a fifth aspect, a terminal device is provided. The terminal device includes a processor and a memory. The memory is configured to store one or more computer programs. The processor is configured to load and run the one or more computer programs stored in the memory, to cause the terminal device to perform the method for wireless communication according to the first aspect or embodiments thereof.

In a sixth aspect, a network device is provided. The network device includes a processor and a memory. The memory is configured to store one or more computer programs. The processor is configured to load and run the one or more computer programs stored in the memory, to cause the network device to perform the method for wireless communication according to the second aspect or embodiments thereof.

In a seventh aspect, a chip is provided. The chip is configured to perform the method for wireless communication according to any one of the first and the second aspects or embodiments thereof.

Specifically, the chip includes a processor configured to load and run one or more computer programs in a memory, to cause a device equipped with the chip to perform the method for wireless communication according to any one of the first and the second aspects or embodiments thereof.

In an eighth aspect, a computer-readable storage medium is provided. The computer-readable storage medium is configured to store one or more computer programs. The one or more computer programs enable a computer to perform the method for wireless communication according to any one of the first and the second aspects or embodiments thereof.

In a ninth aspect, a computer program product is provided. The computer program product includes one or more computer program instructions. The one or more computer program instructions cause a computer to perform the method for wireless communication according to any one of the first and the second aspects or embodiments thereof.

In a tenth aspect, a computer program is provided. The computer program, when loaded and run by a computer, causes the computer to perform the method for wireless communication according to any one of the first and the second aspects or embodiments thereof.

According to the above technical solutions, connections are established between relay nodes to form a relay network, and the terminal device establishes a connection between the terminal device and the target relay node in the network, such that the terminal device is connected to the relay network (i.e., accesses to the relay network). In this way, in a case where the terminal device needs to communicate with another device, the terminal device may quickly establish a connection with a peer device over a relay node in the relay network, and communicates with the peer device, thereby improving the transmission efficiency.

### BRIEF DESCRIPTION OF THE DRAWINGS

FIG. 1 is a schematic diagram of architecture of a communication system according to some embodiments of the present disclosure;
FIG. 2 is a schematic diagram of architecture of another communication system according to some embodiments of the present disclosure;
FIG. 3 is a schematic interaction diagram of a method for wireless communication according to some embodiments of the present disclosure;
FIG. 4 is a schematic interaction diagram of another method for wireless communication according to some embodiments of the present disclosure;
FIG. 5 is a schematic interaction diagram of still another method for wireless communication according to some embodiments of the present disclosure;
FIG. 6 is a schematic block diagram of a terminal device according to some embodiments of the present disclosure;
FIG. 7 is a schematic block diagram of a relay node according to some embodiments of the present disclosure;
FIG. 8 is a schematic block diagram of a communication device according to some embodiments of the present disclosure;
FIG. 9 is a schematic block diagram of a chip according to some embodiments of the present disclosure; and
FIG. 10 is a schematic block diagram of a communication system according to some embodiments of the present disclosure.

### DETAILED DESCRIPTION

The technical solutions according to the embodiments of the present disclosure are described hereinafter in combination with the accompanying drawings in the embodiments of the present disclosure. It is obvious that the described embodiments are merely part but not all of the embodiments of the present disclosure. All other embodiments derived by those skilled in the art without creative efforts based on the embodiments in the present disclosure are within the protection scope of the disclosure.

The technical solutions according to the embodiments of the present disclosure are applicable to various communication systems, for example, a global system of mobile communication (GSM) system, a code division multiple access (CDMA) system, a wideband code division multiple access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), a wireless fidelity (Wi-Fi), a 5^{th} generation (5G) system, other communication systems, or the like.

In general, traditional communication systems support a limited number of connections and are easy to implement. However, with the development of communication technologies, the mobile communication system supports traditional communications and other communications, for example, device-to-device (D2D) communications, machine-to-machine (M2M) communications, machine type communications (MTC), vehicle-to-vehicle (V2V) communications, vehicle-to-everything (V2X) communications, and the like. The embodiments of the present disclosure are applicable to the communication systems.

In some embodiments, the communication system in the embodiments of the present disclosure is applicable to a carrier aggregation (CA) scenario, a dual connectivity (DC) scenario, and a standalone (SA) networking scenario.

In some embodiments, the communication system in the embodiments of the present disclosure is applicable to an unlicensed spectrum, and the unlicensed spectrum is also construed as a shared spectrum. Alternatively, the communication system in the embodiments of the present disclosure is applicable to a licensed spectrum, and the licensed spectrum is also construed as a non-shared spectrum.

The embodiments of the present disclosure are described in conjunction with the network device and the terminal device. The terminal device is also referred to as a user equipment (UE), an access terminal, a subscriber unit, a subscriber station, a mobile station, a mobile, a remote station, a remote terminal, a mobile device, a user terminal, a terminal, a wireless communication device, a user proxy, a user device, or the like.

The terminal device is a station (STA) in WLAN, a cellular phone, a cordless phone, a Session Initiation Protocol (SIP) phone, a wireless local loop (WLL) ST, a personal digital assistant (PDA) device, a hand-held device with a wireless communication capability, a computing device or other processing devices connected to a wireless modem, an in-vehicle device, a wearable device, a next generation communication system, such as a terminal device in NR, a terminal device in an evolved public land mobile network (PLMN), or the like.

In the embodiments of the present disclosure, the terminal device is deployed on the land, for example, indoors or outdoors, handheld, wearable, or in vehicles; or deployed on water (for example, on a ship); or the terminal device is deployed in air (for example, on an airplane, a balloon, or a satellite).

In the embodiments of the present disclosure, the terminal device is a mobile phone, a pad, a computer with a radio transceiver function, a virtual reality (VR) device, an augmented reality (AR) device, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, or the like.

By way of example but not limitation, in the embodiments of the present disclosure, the terminal device may also be a wearable device. The wearable device is also referred to as a wearable smart device, and is a generic name of wearable devices such as glasses, gloves, watches, clothing, and shoes, which are intelligently designed and developed for daily wear by using wearable technologies. The wearable device is a portable device that is directly worn on the body or integrated into clothing or accessories of the user. The wearable device is not only a hardware device, but also implements powerful functions by software support, data interaction, and cloud interaction. The wearable smart device in a broad sense includes devices such as smart watches or smart glasses that have full functionality and large size, and are capable of implementing all or part of functionality without depending on the smart phone, and devices such as various kinds of smart bracelets and smart jewelries for monitoring physical signs, which are dedicated to a specific type of application functions and need to be used in cooperation with other devices such as the smart phone.

In the embodiments of the present disclosure, the network device is a device for communicating with the mobile device, the network device is an access point (AP) in WLAN, a base transceiver station (BTS) in GSM or CDMA, a NodeB (NB) in WCDMA, an evolved NodeB (eNB or eNodeB) in LTE, a relay station or an AP, an in-vehicle device, a wearable device, a network device or a base station (gNB) in an NR network, or a network device in an evolved PLMN or an NTN.

By way of example but not limitation, in the embodiments of the present disclosure, the terminal device is mobile. For example, the network device is a mobile device. In some embodiments, the network device is a satellite or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device is also an NB located on land, water, or the like.

In the embodiments of the present disclosure, the network device provides services for cells, and the terminal device communicates with the network device over the transmission resources (such as frequency domain resources, or spectrum resources) used in the cells. The cell is a cell corresponding to the network device (such as the NB), and the cell belongs to a macro NB or a NB corresponding to a small cell. The small cell includes a metro cell, a micro cell, a pico cell, a femto cell, or the like. The small cells have the small coverage and low transmission power, and are suitable for providing high rate data transmission services.

It should be understood that the terms "system" and "network" herein are interchangeably used. The term "and/or" herein describes an association relationship between associated objects, and indicates three types of relationships. For example, the phrase "A and/or B" means (A), (B), or (A and B). In addition, the symbol "/" generally indicates an "or" relationship between the associated objects.

The terms used in the embodiments of this application are intended to explain the specific embodiments of this application, not to limit this application. The terms "first," "second," "third," and "fourth," and the like in the specification and claims of the present disclosure and the accompanying drawings are used to distinguish different objects, not to describe a specific order. In addition, the terms "include" and "have" and any variations thereof are intended to cover non-exclusive inclusion.

It should be understood that the term "indicate" in the embodiments of the present disclosure means a direct indication, an indirect indication, or an indication that there is an associated relationship. For example, A indicating B means that A indicates B directly, e.g., B may be acquired by A; or that A indicates B indirectly, e.g., A indicates C by which B may be acquired; or that an association is present between A and B.

In the description of the embodiments of the present disclosure, the term "corresponding" mean that there is a direct correspondence or indirect correspondence between two objects, an association relationship between two objects, an indicating and being indicated relationship, or a configuring and being configured relationship.

In the embodiments of the present disclosure, the "predefinition" or "pre-configuration" is achieved by pre-storing corresponding codes or forms in the device (for example, including the terminal device and the network device) or other means for indicating relevant information, and the specific implementations are not limited in the present disclosure. For example, the predefinition is defined in the protocol.

In the embodiments of the present disclosure, the "protocol" indicates standard protocols in the field of communications, for example, the LTE protocol, the NR protocol, and related protocols applied to the future communication system, which are not limited in the present disclosure.

For better understanding of the technical solutions according to the embodiments of the present disclosure, the technical solutions of the present disclosure are described in detail hereinafter with specific embodiments. Alternatively, the following related technologies may be combined with the technical solutions according to the embodiments of the present disclosure in any manner, all of which fall within protection scope of the embodiments of the present disclosure. The embodiments of the present disclosure include at least part of the following content.

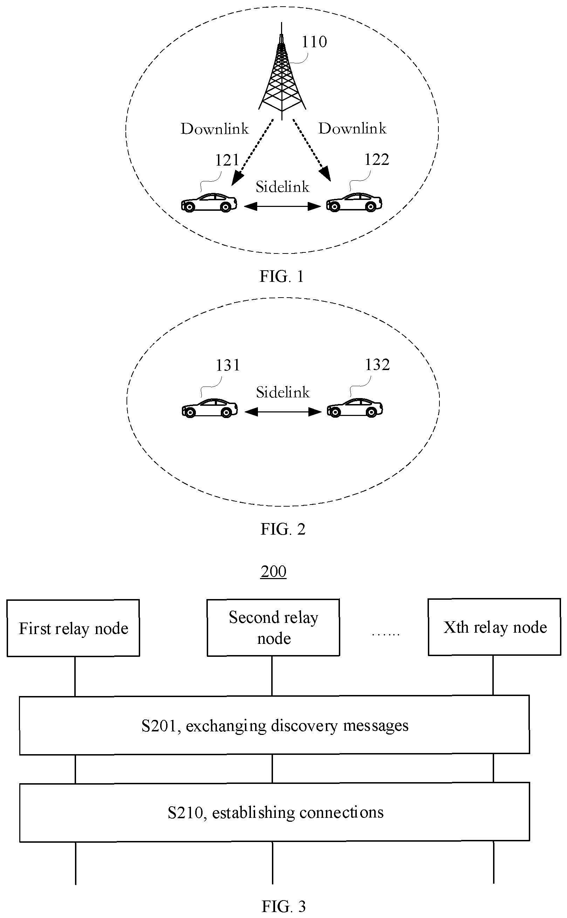

FIG. 1 is a schematic diagram of a communication system according to some embodiments of the present disclosure. Transmission resources are allocated by a base station 110 to vehicle-mounted terminals (a vehicle-mounted terminal 121 and a vehicle-mounted terminal 122), and the vehicle-mounted terminals transmit data on sidelinks based on the resources allocated by the base station 110. Specifically, the base station 110 allocates resources for single transmissions to the terminals, or allocates resources for semi-persistent transmissions to the terminals.

FIG. 2 is a schematic diagram of another communication system according to some embodiments of the present disclosure. Vehicle-mounted terminals (a vehicle-mounted terminal 131 and a vehicle-mounted terminal 132) autonomously select transmission resources from sidelink resources and perform data transmission over the selected transmission resources. In some embodiments, the vehicle-mounted terminal selects a transmission resource randomly or in a sensing manner.

It should be noted that device-to-device communication is sidelink (SL) communication based on device-to-device (D2D). Unlike a conventional cellular system in which communication data is received or transmitted over a base station, a vehicle-to-everything (V2X) system adopts a method for direct D2D communication, such that the spectral efficiency is higher and the transmission delay is lower. Two transmission modes are defined in the 3GPP specification, which are respectively denoted as a sidelink resource allocation mode A (Mode A) and a sidelink resource allocation mode B (Mode B).

Mode A: A transmission resource of a terminal is allocated by a base station, and the terminal transmits data on an SL based on the resource allocated by the base station. The base station may allocate a resource to the terminal for single transmission, or allocate a resource to the terminal for semi-static transmission.

Mode B: The terminal selects a resource from a resource pool and performs data transmission over the selected resource.

Proximity-based Services (ProSe) involve device-to-device communications, primarily targeting public safety services. In the ProSe, power saving is achieved by configuring a position of a resource pool in a time domain, for example, the resource pool is non-contiguously configured in the time domain, and therefore the UE transmits/receives data discontinuously on the SL.

The V2X system is primarily applicable to vehicle-to-vehicle communication scenarios, and is mainly oriented to services involving relatively high-speed mobility between vehicles and vehicle-to-pedestrian communications. In V2X, because a vehicle-mounted system has reliable and sufficient power supply, power efficiency is not a main issue, while delay of data transmission is a major issue. Therefore, continuous transmission and reception by the terminal device is required in the system design.

In a wearable device (Further Enhanced Device to Device, FeD2D) scenario, a scenario in which a wearable device accesses a network over a mobile phone is studied, which is mainly applicable to scenarios with low moving speeds and low power access.

In the FeD2D, a base station is capable of configuring discontinuous reception (DRX) parameters of a remote terminal over a relay terminal.

In new radio vehicle-to-everything (NR-V2X), autonomous driving is supported. Therefore, higher requirements are imposed on data interaction between vehicles, for example, higher throughput, lower latency, enhanced reliability, extended coverage, and more flexible resource allocation.

In a long-term evolution vehicle-to-everything (LTE-V2X) system, broadcast transmission is supported. In an NR-V2X system, unicast transmission and multicast transmission are introduced.

Similar to the LTE V2X system, the NR V2X system may define the above two resource authorization modes: Mode A and Mode B. The resource acquisition is indicated by sidelink authorization, that is, a sidelink authorization indicates corresponding time-frequency positions of physical sidelink control channel (PSCCH) and physical sidelink shared channel (PSSCH) resources.

In addition to feedback-free hybrid automatic repeat request (HARQ) retransmission which is autonomously initiated by a UE, feedback-based HARQ retransmission is introduced in NR V2X, which is not limited to unicast communication, but also includes multicast communication.

Similar to the LTE V2X system, in the NR V2X system, because a vehicle-mounted system has reliable and sufficient power supply, the power efficiency is not a main issue, while the delay of data transmission is a major issue. Therefore, continuous transmission and reception by the terminal device is required in the system design.

The sidelink terminal may trigger a sidelink radio resource control (RRC) reconfiguration process in the following scenarios:
releasing a sidelink data bearer during unicast communication;
establishing a sidelink data bearer during unicast communication;
modifying a related configuration of a sidelink data bearer during unicast communication;
in a terminal-to-network relay scenario, releasing a PC5 relay radio link control (RLC) channel between a layer-2 relay terminal and a remote terminal;
in a terminal-to-network relay scenario, establishing a PC5 relay RLC channel between a layer-2 relay terminal and a remote terminal;
in a terminal-to-network relay scenario, modifying configuration parameters related to a PC5 relay RLC channel between a layer-2 relay terminal and a remote terminal;
reconfiguring parameters related to NR sidelink measurement reporting;
reconfiguring a sidelink channel state information (CSI) reference signal resource and a CSI reporting delay boundary; and
reconfiguring DRX of a peer terminal.

The remote terminal performs measurement reporting, and information such as a relay terminal identifier, a serving cell identifier, and reference signal received power (RSRP) measurement is included in the measurement report information. In a case where the remote terminal executes the indirect-to-direct path switching, for a serving relay terminal, it is highly recommended to use a sidelink reference signal received power (SL-RSRP) to perform the measurement on the sidelink; and in a case where the remote terminal executes the direct-to-indirect path switching, the sidelink discovery reference signal receiving power (SD-RSRP) is used to perform the measurement on the sidelink. In addition, two new measurement report trigger events are defined for the terminal-to-network relay handover during measurement reporting. In event 1, in a case where a link quality of the serving relay terminal is lower than a configured threshold, in some embodiments, a link quality of a neighbor adjacent cell is higher than the configured threshold, the remote terminal performs the measurement reporting; and in event 2, in a case where a link quality of a serving cell is lower than the configured threshold, in some embodiments, a link quality of a relay terminal is higher than the configured threshold, and the remote terminal performs the measurement reporting. In addition, a new timer is introduced to assist the remote terminal in performing the direct-to-indirect path switching. In a case where the remote terminal receives an RRC reconfiguration message indicating the direct-to-indirect path switching, the remote terminal starts the timer. In a case where the timer times out, the remote terminal performs RRC re-establishment.

With development of communication systems, various network environments coexist, that is, various spectrum resources coexist, and backbone networks connected to different relay terminals may also be different. In this case, how to perform relay communications to improve the data transmission efficiency is an urgent problem to be resolved.

For ease of understanding of the technical solutions according to the embodiments of the present disclosure, the technical solutions of the present disclosure are described in detail hereinafter with specific embodiments. The related technologies above are considered optional solutions and may be combined in any way with the technical solutions according to the embodiments of the present disclosure, all of which fall within the protection scope of the embodiments of the present disclosure. The embodiments of the present disclosure include at least part of the following content.

### First Embodiment:

FIG. 3 is a schematic interaction diagram of a method 200 for wireless communication according to some embodiments of the present disclosure. As illustrated in FIG. 3, the method 200 includes at least a part of the following content.

In S210, relay nodes establish connections between each other to form a relay network.

In some embodiments, the relay network is a mesh network.

In some embodiments, relay nodes in the relay network are configured to communicate with each other over direct connections or relay-based connections.

That is, in the relay network, relay nodes are configured to communicate with each other directly or over other relay nodes.

In some embodiments of the present disclosure, a connection, a link, and a path are interchanged.

In some embodiments of the present disclosure, a direct connection is also referred to as a direct link, a direct path, or a unicast connection; and a relay-based connection is also referred to as a relay link, a relay path, an indirect connection, an indirect link, or an indirect path.

In some embodiments, a plurality of relay nodes in the relay network are pre-deployed relay nodes. For example, the plurality of relay nodes are a plurality of relay nodes that are pre-deployed in an indoor scenario.

In some embodiments, the relay node is a terminal device in a communication system, or the relay node is a deployed dedicated node.

In some embodiments, in the relay network, one relay node corresponds to one piece of identification information, wherein the identification information uniquely identifies the relay node. Therefore, the relay node is maintained by maintaining the identification information of the relay node. In some embodiments, the identification information of the relay node is a group member identifier (ID) of the relay node. In some embodiments, the identification information of the relay node is a permanent identifier.

In some embodiments, the identification information of the relay node is assigned by an operation, administration and maintenance (OAM) entity.

In some other embodiments, the identification information of the relay node is assigned by a third-party decision entity. In some embodiments, the third-party decision entity is a third-party decision entity other than operators and users, for example, an application layer entity.

In still other embodiments, the identification information of the relay node is assigned by a relay management node. The relay management node is an entity that has a management or control function in the relay network.

In some embodiments, in the relay network, a quantity of direct connections established by the relay nodes is at least N, and the N direct connections are direct connections between the relay nodes. That is, one relay node needs to establish direct connections with at least other N relay nodes.

In some embodiments, the method 200 further includes:
S201, detecting, by the relay node, a neighbor relay node by transmitting a discovery message and/or receiving a discovery message.

In some embodiments, the discovery message includes at least one of: identification information of a relay node; a quantity M of established direct connections between the relay node and other relay nodes; or identification information of a peer relay node corresponding to the established direct connections between the relay node and the other relay nodes.

In some embodiments, the method 200 further includes: determining, by the relay node, whether to establish a direct connection with another relay node based on a discovery message received from the another relay node.

For example, a first relay node acquires link quality information between the first relay node and a second relay node by measuring a discovery message from the second relay node, and further determines whether to establish a direct connection between the first relay node and the second relay node based on the link quality information between the first relay node and the second relay node.

In some embodiments, in a case where the link quality between the first relay node and the second relay node is higher than a predetermined threshold, the first relay node determines to establish the direct connection between the first relay node and the second relay node.

In some embodiments, the first relay node receives discovery messages from X relay nodes, measures the discovery messages from the X relay nodes, selects relay nodes on N links with highest link quality, and establishes connections between the first relay node and the relay nodes.

In some embodiments, after N direct connections are established between the relay nodes, reachability of connections in the network is tested, so as to detect whether the relay nodes can communicate with other relay nodes in the network over direct connections or multi-hop relay-based connections.

In conclusion, based on the manner described in the method 200, the relay network is formed, and relay nodes in the relay network are all reachable, for example, reachable over direct connections, or reachable over multi-hop relay-based connections. Further, the terminal device may quickly establish a connection between the terminal device and a peer terminal and communicate with the peer device over the relay network.

### Second Embodiment:

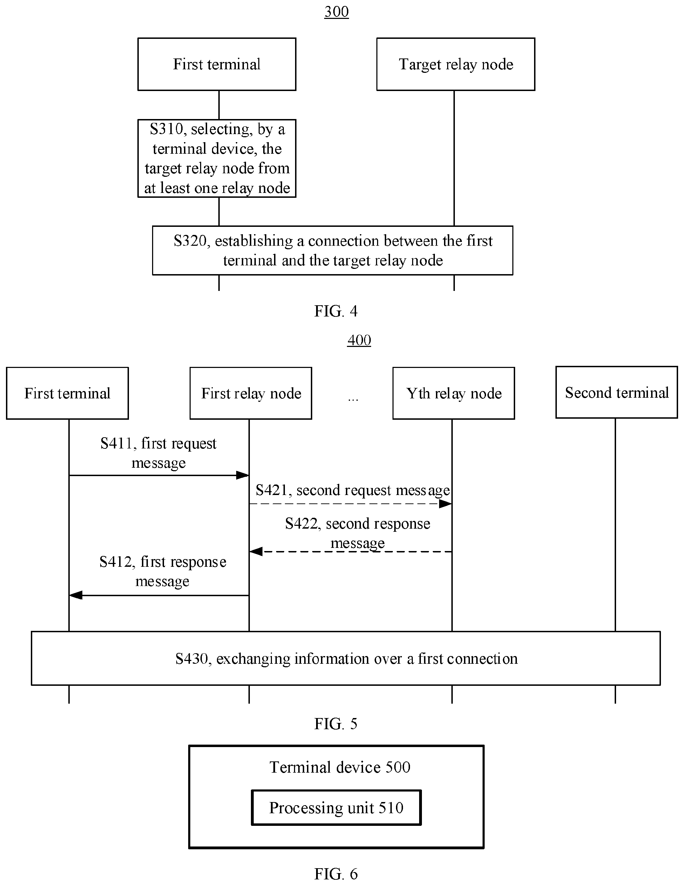

FIG. 4 is a schematic interaction diagram of another method 300 for wireless communication according to some embodiments of the present disclosure. As illustrated in FIG. 4, the method 300 includes at least a part of the following content.

In S310, a first terminal selects a target relay node from at least one relay node, wherein the at least one relay node is at least a portion of relay nodes deployed in a network, the relay nodes deployed in the network being configured to communicate with each other over direct connections or relay-based connections.

In S320, the first terminal establishes a connection between the first terminal and the target relay node.

In some embodiments, the network is established based on the manner described in the method 200. That is, the network is the relay network in the method 200.

In some embodiments, the connection between the target relay node and the first terminal is a connection first established by the first terminal in the network. That is, the first terminal is connected to the network (or accesses the network) over the target relay node.

In some embodiments, the first terminal determines the connection between the first terminal and the target relay node as a primary connection.

In some embodiments, the method 300 further includes: receiving, by the first terminal, first indication information from the target relay node, wherein the first indication information indicates identification information of the first terminal in the network.

In some embodiments, the identification information of the first terminal in the network is assigned to the first terminal by the target relay node. In some embodiments, the identification information of the first terminal in the network is a group member ID of the first terminal in the network. In some embodiments, the group member ID corresponding to the first terminal is a temporary group member ID. That is, in a case where the first terminal accesses the network, the target relay node assigns the temporary group member ID to the first terminal.

In some embodiments, the first terminal detects the at least one relay node by receiving a discovery message, and the target relay node is selected by the first terminal by receiving the discovery message.

For example, the first terminal receives at least one discovery message from the at least one relay node; and the first terminal determines the target relay node in the at least one relay node based on the at least one discovery message received from the at least one relay node.

In a specific embodiment, in a case where the first terminal is close to relay nodes in the network, the first terminal receives discovery messages from one or more relay nodes, and determines the target relay node in the one or more relay nodes based on the discovery messages from the one or more relay nodes.

In some embodiments, the first terminal acquires link quality information between the first terminal and the one or more relay nodes by measuring the discovery messages from the one or more relay nodes, and selects the target relay node from the one or more relay nodes based on the link quality information between the first terminal and the one or more relay nodes, for example, selects a relay node on a link with highest link quality, or selects a relay node on a link whose link quality is higher than a first threshold.

In some embodiments, the discovery message includes identification information of the relay node in the network, for example, a group member ID.

In some embodiments, the first terminal determines, based on the at least one discovery message from the at least one relay node, whether to establish a connection between the first terminal and the at least one relay node, or whether to first establish a connection between the first terminal and the at least one relay node.

For example, the first terminal measures the at least one discovery message from the at least one relay node, and determines, based on measured link quality information between the first terminal and the at least one relay node, whether to establish a connection between the first terminal and the at least one relay node. For example, the first terminal determines to establish a connection between the first terminal and a relay node on a link with highest link quality, or determines to establish a connection between the first terminal and a relay node on a link whose link quality is higher than a first threshold. That is, the target relay node is a relay node on a link with highest link quality information, or a relay node on a link whose link quality is higher than a first threshold.

In some embodiments, the method 300 further includes: reporting, by the first terminal, measurement reports of M relay nodes to the target relay node, wherein M is a positive integer.

In some embodiments, the measurement reports of the M relay nodes are acquired by measuring received discovery messages from the M relay nodes.

In some embodiments, the measurement reports include link quality information between the first terminal and the M relay nodes.

Further, the target relay node may select K relay nodes from the M relay nodes based on the measurement reports reported by the first terminal, and indicate the K relay nodes to the first terminal.

For example, the target relay node transmits second indication information to the first terminal, wherein the second indication information indicates identification information of the K relay nodes in the network. Further, the first terminal establishes connections between the first terminal and the K relay nodes.

In some embodiments, the K relay nodes are selected by the target relay node based on link quality information between the first terminal and the M relay nodes in the measurement reports. For example, the K relay nodes are K relay nodes on K links with highest link quality in the M relay nodes, or relay nodes on K links whose link quality meets a second threshold.

In some embodiments, the first terminal establishes connections between the first terminal and the K relay nodes using the identification information of the first terminal in the network. For example, the first terminal transmits discovery response messages to the K relay nodes, wherein the discovery response messages include the identification information of the first terminal in the network.

In some embodiments, the first terminal determines the connections between the first terminal and the K relay nodes as secondary connections, or, secondary links.

In some embodiments, the first terminal determines the target relay node as a primary relay node, and determines the K relay nodes as secondary relay nodes.

In some embodiments of the present disclosure, the method 300 further includes: acquiring, by a first terminal, first configuration information, wherein the first configuration information is used to configure a usage mode of an established connection of the first terminal.

In some embodiments, the first configuration information is received from the target relay node, or the first configuration information is preconfigured.

In some embodiments, the usage mode of the established connection of the first terminal includes, but is not limited to, at least one of: determining the connection between the first terminal and the target relay node as a primary connection; determining the connections between the first terminal and the one or more relay nodes as secondary connections; or performing transmission by the first terminal using a plurality of the relay nodes.

In some embodiments, the first terminal or the target relay node configures the primary connection identity to the K relay nodes.

Therefore, the K relay nodes are aware of the connection between the first terminal and the target relay node being determined as the primary connection.

In some embodiments, the first terminal performs transmission using the plurality of relay nodes includes at least one of the following manners.

In manner 1: initial transmission of target data and retransmission of the target data are transmitted over different relay nodes.

In manner 2: target data is transmitted to different receiver terminals over different relay nodes.

In manner 3: target data using different spatial filters is transmitted over different relay nodes.

Transmission based the manner 1 helps to ensure the reliability of data transmission.

Transmission based on the manner 2 helps to ensure that data is transmitted to a peer device over a proper path or a shortest path.

Transmission based on the manner 3 helps to ensure that data is transmitted to a peer device over a proper path or a shortest path.

In some embodiments, transmitting the target data to the different receiver terminals over the different relay nodes includes: determining relay nodes used for transmitting the target data based on the receiver terminals of the target data and a first mapping relationship, wherein the first mapping relationship is a mapping relationship between identification information (e.g., a group member ID) of the receiver terminals in the network and the identification information of the relay nodes in the network.

For example, in a case where the first terminal communicates with different terminals, the first terminal performs relaying using corresponding relay nodes based on the first mapping relationship.

In some embodiments, transmitting the target data using the different spatial filters over the different relay nodes includes: determining the relay nodes used for transmitting the target data based on the spatial filters used by the target data and a second mapping relationship, wherein the second mapping relationship is a mapping relationship between the spatial filters and the relay nodes.

In some embodiments, the spatial filter is a beam. For example, target data transmitted by the first terminal in different beam directions is transmitted over different relay nodes.

In some embodiments, the first mapping relationship is configured by the target relay node or configured by the network device.

In some embodiments, the second mapping relationship is configured by the target relay node or configured by the network device.

In some embodiments, the method 300 further includes: receiving, by the first terminal, second configuration information from the target relay node, wherein the second configuration information is used to configure change information of a connection of the first terminal.

In some embodiments, the change information of the connection of the first terminal includes: release of connections between the first terminal and one or more relay nodes; addition of connections between the first terminal and the one or more relay nodes; change of the primary connection of the first terminal to the secondary connection; and change of the secondary connection of the first terminal to the primary connection.

In summary, based on the manner described in the method 300, the terminal device establishes a connection between the first terminal and the relay network (i.e., accesses the relay network). In this way, in a case where the terminal device needs to communicate with another device, the terminal device may quickly establish a connection between the first terminal and a peer device and communicate with the peer device over the relay network, thereby improving the transmission efficiency.

### Third Embodiment:

FIG. 5 is a schematic interaction diagram of another method 400 for wireless communication according to some embodiments of the present disclosure. As illustrated in FIG. 5, the method 400 includes at least a part of the following contents.

In S411, a first terminal transmits a first request message to a first relay node in a case where the first terminal needs to communicate with a second terminal, wherein the first request message is used to request establishment of a connection between the first terminal and the second terminal, that is, the first request message is used to determine (or acquire) a reachable connection or an available connection between the first terminal and the second terminal.

It should be understood that the method 400 is applicable to communications between two terminals, or is applicable to communications between a terminal and a network device. For example, in a case where the first terminal needs to communicate with the network device, the first terminal transmits a first request message to the first relay node, wherein the first request message is used to request establishment of a connection between the first terminal and the network device, or the first request message is used to acquire a reachable connection or an available connection between the first terminal and the network device.

In some embodiments, the first relay node is a relay node in the relay network established based on the method 200.

In some embodiments, the first relay node is a relay node with which the first terminal first establishes a connection in a case where the first terminal accesses the network. For example, the first relay node is the target relay node in the method 300.

In some embodiments, the first relay node is a primary relay node or a secondary relay node.

In some embodiments, the first request message is also referred to as a connection establishment request message or a connection acquisition request message.

In some embodiments, the first request message includes identification information of the second terminal in the network. That is, in a case where the first terminal requests establishment of a connection or acquisition of a reachable connection, the first terminal carries identification information of a peer terminal.

In some embodiments, the method 400 further includes:
S412, transmitting, by the first relay node, a first response message to the first terminal, wherein the first response message indicates information or a status of a connection between the first relay node and the second terminal.

In some embodiments, the first response message further includes at least one of: a hop count from the first relay node to the second terminal; link quality information of the connection between the first relay node and the second terminal; or identification information of a relay node traversed from the first relay node to the second terminal, for example, a list of group member IDs of relay nodes traversed from the first relay node to the second terminal, or a list of group member IDs of relay nodes traversed from the second terminal to the first relay node.

In some embodiments, the first response message is also referred to as a connection establishment response message or a connection acquisition response message.

In some embodiments, the first relay node transmits the first response message to the first terminal in a case where the first relay node is aware of the reachable connection from the first terminal to the second terminal or the first relay node being connected to the second terminal.

In some embodiments, the first relay node being connected to the second terminal includes: a direct connection being established between the first relay node and the second terminal.

In some embodiments, the first relay node being aware of the reachable path from the first terminal to the second terminal includes: a direct connection being established between the first relay node and the second terminal; and no direct connection being established between the first relay node and the second terminal, but the first relay node being aware of the reachable path from the first terminal to the second terminal in advance.

In some embodiments, the method 400 further includes:
S421, in a case where the first relay node is not connected to the second terminal, transmitting, by the first relay node, a second request message to another relay node connected to the first relay node, wherein the second request message includes identification information of the second terminal in a gateway network, and the second request message is used to request the another relay node to determine a reachable connection between the another relay node and the second terminal.

In some embodiments, the first relay node being not connected to the second terminal includes: no direct connection being established between the first relay node and the second terminal.

Further, the method 400 further includes:
S422, receiving, by the first relay node, a second response message from the another relay node connected to the target relay node, wherein the second response message indicates information or a status of a connection between the another relay node and the second terminal.

In some embodiments, in a case where no direct connection is established between the another relay node and the second terminal, the another relay node continues to transmit the request message to the relay node connected thereto, until the another relay node is aware of a connection that can reach the second terminal.

In some embodiments, the second response message further includes at least one of: a hop count from the another relay node to the second terminal; link quality information of a connection between the another relay node and the second terminal; or identification information of a relay node traversed from the another relay node to the second terminal.

In summary, in a case where the first relay node is connected to the second terminal, the first relay node directly feeds back, to the first terminal, the information of the connection that can reach the second terminal. In a case where the first relay node is not connected to the second terminal, the first relay node forwards the connection establishment request message to the relay node connected thereto, and receives a connection establishment response message replied by another relay node, such that the information of the connection that can reach the second terminal is acquired in a relay-assisted manner. Specifically, the connection establishment request message is sequentially transmitted to the respective relay nodes on the path that can reach the second terminal. Further, a relay node on the path replies a connection establishment response message to a previous-hop relay node, wherein the connection establishment response message carries information of a connection between the relay node and the second terminal, such that the information of a connection that is reachable from the first terminal to the second terminal is acquired.

In some embodiments, the method 400 further includes: determining, by the first terminal, whether to communicate with the second terminal over a first connection based on information carried in the first response message and first information, wherein the first information is used to configure a usage condition for an available connection.

In some embodiments, the first information is preconfigured, or configured by a network device, or configured by the target relay node.

In some embodiments, the first connection is a reachable connection between the first terminal and the second terminal that is determined based on a connection establishment response message.

In some embodiments, the first information is used to configure at least one of:
a maximum quantity P of connections that are available to the first terminal (or unicast connections), wherein the maximum quantity P indicate that the first terminal is capable of communicating with the second terminal over at most P connected relay nodes;
a link quality threshold of a connection available to the first terminal, that is, a link quality of each hop to the second terminal needs to meet the link quality threshold; or
a maximum hop count L available to the communication of the first terminal, that is, a hop count from the first terminal to the second terminal cannot be greater than L.

In some embodiments, the first connection is determined to be an available connection in the case of meeting at least one of:
a quantity of connections that are included in the first connection and that are directly with the first terminal being less than or equal to the maximum quantity of connections available to the first terminal;
link quality of each hop in the first connection meeting the link quality threshold of a connection available to the first terminal; or
a hop count included in the first connection being less than or equal to the maximum hop count available to communication of the first terminal.

In some embodiments, the method 400 further includes:
S430, exchanging, by the first terminal, target information with the second terminal over the first connection, wherein the target information includes identification information of a relay node traversed on the first connection.

For example, in a case where the first connection is an available connection, target information is exchanged with the second terminal over the first connection, wherein the target information carries identification information of the relay node traversed on the first connection, e.g., a group member ID.

In some embodiments, the target information includes at least one of configuration information or capability information.

That is, in a case where the first terminal exchanges at least one of the configuration information or the capability information with the second terminal, the identification information of the relay node traversed on the first connection is carried in at least one of the configuration information or the capability information.

In summary, based on the constructed relay network, in a case where the terminal device needs to communicate with another device, the terminal device is capable of quickly finds a path that can reach a peer device, such that the terminal is capable of quickly communicating with the peer device, thereby improving the transmission efficiency.

It should be noted that the first embodiment, the second embodiment, and the third embodiment described above may be separately implemented or implemented in combination, which is not limited in the present disclosure.

For example, the relay network is constructed based on the manner described in the first embodiment. Further, the terminal device accesses the relay network in the manner described in the second embodiment. In a case where a communication is required, the terminal device communicates with a peer device based on the manner described in the third embodiment.

Therefore, based on the first embodiment, fast networking of relay nodes is implemented, and connections between relay nodes are established. Further, the terminal device that temporarily accesses the network is maintained based on the second embodiment, and based on the third embodiment, a connection to the peer device is quickly established and the communication is performed.

The method embodiments of the present disclosure have been described in detail above with reference to FIG. 3 to FIG. 5, and apparatus embodiments of the present disclosure are described in detail hereinafter with reference to FIG. 6 to FIG. 10. It should be understood that the apparatus embodiments correspond to the method embodiments and that reference may be made to the method embodiments for similar descriptions.

FIG. 6 illustrates a schematic block diagram of a terminal device 500 according to some embodiments of the present disclosure. As illustrated in FIG. 6, the terminal device 500 includes: a processing unit 510.

The processing unit 510 is configured to select a target relay node from at least one relay node, wherein the at least one relay node is at least a portion of relay nodes deployed in a network, the relay nodes deployed in the network being configured to communicate with each other over direct connections or relay-based connections; and establish a connection with the target relay node.

In some embodiments, the terminal device 500 further includes: a communication unit, wherein the communication is configured to receive at least one discovery message from the at least one relay node; and the processing unit 510 is further configured to determine the target relay node in the at least one relay node based on the at least one discovery message received from the at least one relay node.

In some embodiments, the at least one discovery message includes identification information of the at least one relay node in the network.

In some embodiments, in the network, one relay node corresponds to one piece of identification information, wherein the identification information identifies the relay node.

In some embodiments, the terminal device 500 further includes: a communication unit, configured to receive first indication information from the target relay node, wherein the first indication information indicates the identification information of the terminal device in the network.

In some embodiments, the identification information of the terminal device in the network is assigned to the terminal device by the target relay node.

In some embodiments, the processing unit 510 is further configured to: determine the connection between the terminal device and the target relay node as a primary connection.

In some embodiments, the terminal device 500 further includes: a communication unit, configured to report, to the target relay node, measurement reports of other relay nodes excluding the target relay node in the at least one relay node.

In some embodiments, the measurement reports of the other relay nodes are acquired by measuring discovery messages from the other relay nodes.

In some embodiments, the terminal device 500 further includes: a communication unit, wherein the communication unit is configured to receive second indication information from the target relay node, wherein the second indication information indicates identification information of one or more relay nodes in the network; and the processing unit 510 is further configured to establish connections between the terminal device and the one or more relay nodes.

In some embodiments, the processing unit 510 is further configured to establish the connections between the terminal device and the one or more relay nodes based on the identification information of the terminal device in the network.

In some embodiments, the terminal device 500 further includes: a communication unit, configured to receive first configuration information from the target relay node, wherein the first configuration information is used to configure a usage mode of an established connection of the terminal device.

In some embodiments, the usage mode of the established connection of the first terminal includes at least one of: determining the connection between the first terminal and the target relay node as a primary connection; or performing transmission by the first terminal using a plurality of the relay nodes.

In some embodiments, performing transmission by the terminal device using the plurality of relay nodes includes at least one of:
transmitting, by the terminal device, initial transmission of target data and retransmission of the target data over different relay nodes;
transmitting, by the terminal device, target data to different receiver terminals over different relay nodes; or
transmitting, by the terminal device, target data using different spatial filters over different relay nodes.

In some embodiments, transmitting, by the terminal device, the target data to the different receiver terminals over the different relay nodes includes: determining, by the terminal device, relay nodes used for transmitting the target data based on the receiver terminals of the target data and a first mapping relationship, wherein the first mapping relationship is a mapping relationship between identification information of the receiver terminals in the network and identification information of the relay nodes in the network.

In some embodiments, transmitting, by the terminal device, the target data using the different spatial filters over the different relay nodes includes: determining, by the terminal device, the relay nodes used for transmitting the target data based on the spatial filters used by the target data and a second mapping relationship, wherein the second mapping relationship is a mapping relationship between the spatial filters and the relay nodes.

In some embodiments, the terminal device 500 further includes: a communication unit, configured to receive second configuration information from the target relay node, wherein the second configuration information is used to configure change information of a connection of the first terminal.

In some embodiments, the change information of the connection of the first terminal includes: release of connections between the first terminal and one or more relay nodes; or addition of connections between the first terminal and the one or more relay nodes.

In some embodiments, the terminal device 500 further includes: a communication unit, configured to transmit a first request message to a first relay node in a case where the terminal device needs to communicate with a second terminal, wherein the first request message is used to request establishment of a connection between the terminal device and the second terminal.

In some embodiments, the first request message includes identification information of the second terminal in the network.

In some embodiments, the first relay node is the target relay node.

In some embodiments, the terminal device 500 further includes: a communication unit, configured to receive a first response message from the first relay node, wherein the first response message indicates information of a connection between the first relay node and the second terminal.

In some embodiments, the first response message further includes at least one of: a hop count from the first relay node to the second terminal; link quality information of a connection between the first relay node and the second terminal; or identification information of a relay node traversed from the first relay node to the second terminal.

In some embodiments, the processing unit 510 is further configured to determine, based on information carried in the first response message and first information, whether to communicate with the second terminal over a first connection, wherein the first information is used to configure a usage condition for an available connection, and the first connection is a reachable connection between the terminal device and the second terminal determined using the first response message.

In some embodiments, the first information is used to configure at least one of: a maximum quantity of connections available to the terminal device; a link quality threshold for the connections available to the terminal device; or a maximum hop count available for communication by the terminal device.

In some embodiments, the first information is preconfigured, or configured by a network device, or configured by the target relay node.

In some embodiments, the processing unit 510 is further configured to exchange target information with the second terminal over the first connection, wherein the target information includes identification information of a relay node traversed on the first connection.

In some embodiments, the target information includes at least one of configuration information or capability information. In some embodiments, the communication unit is a communication interface or a transceiver, or an input-output interface of a communication chip or system on a chip. The processing unit is one or more processors.

It should be understood that the terminal device 500 according to the embodiments of the present disclosure corresponds to the first terminal in the method embodiments of the present disclosure, and the above and other operations and/or functions of the units in the terminal device 500 are separately for implementing corresponding processes of the first terminal in the method embodiments illustrated in FIG. 3 to FIG. 5. For brevity, details are not repeated herein any further.

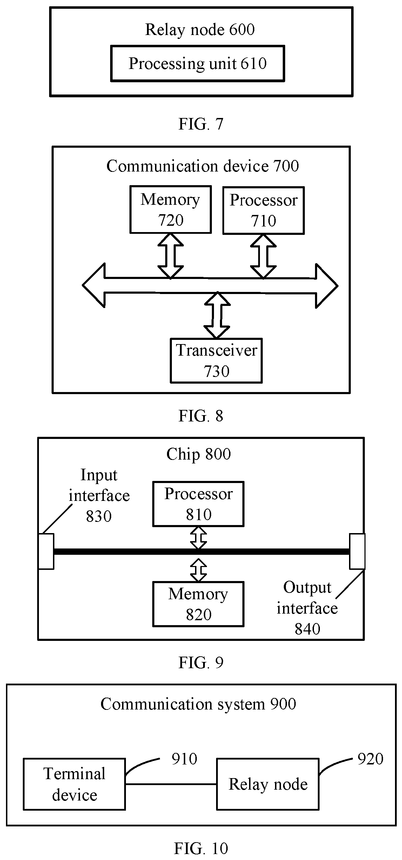

FIG. 7 is a schematic block diagram of a relay node 600 according to some embodiments of the present disclosure. The relay node 600 in FIG. 7 includes: a processing unit 610.

The processing unit 610 is configured to establish a connection between the relay node and a first terminal, wherein the relay node is one of relay nodes deployed in a network, the relay nodes deployed in the network being configured to communicate with each other over direct connections or relay-based connections.

In some embodiments, the relay node 600 further includes: a communication unit, configured to transmit first indication information to the first terminal, wherein the first indication information indicates identification information of the first terminal in the network.

In some embodiments, the identification information of the first terminal in the network is assigned to the first terminal by the relay node.

In some embodiments, the relay node 600 further includes: a communication unit, configured to receive a measurement report of at least one relay node reported by the first terminal.

In some embodiments, the measurement report of the at least one relay node is acquired by measuring at least one discovery message from the at least one relay node.

In some embodiments, the relay node 600 further includes: a communication unit, configured to transmit second indication information to the first terminal, where the second indication information indicates identification information of one or more relay nodes in the network.

In some embodiments, the one or more relay nodes are selected by the relay node based on the measurement report of the at least one relay node.

In some embodiments, the relay node 600 further includes: a communication unit, configured to transmit first configuration information to the first terminal, wherein the first configuration information is used to configure a usage mode of an established connection of the first terminal.

In some embodiments, the usage mode of the established connection of the first terminal includes at least one of: determining the connection between the first terminal and the target relay node as a primary connection; or performing transmission by the first terminal using a plurality of the relay nodes.

In some embodiments, performing transmission by the first terminal using the plurality of relay nodes includes at least one of:
transmitting, by the first terminal, initial transmission of target data and retransmission of the target data over different relay nodes;
transmitting, by the first terminal, target data to different receiver terminals over different relay nodes; or
transmitting, by the first terminal, target data using different spatial filters over different relay nodes.

In some embodiments, transmitting, by the first terminal, the target data to the different receiver terminals over the different relay nodes includes: determining, by the first terminal, relay nodes used for transmitting the target data based on the receiver terminals of the target data and a first mapping relationship, wherein the first mapping relationship is a mapping relationship between identification information of the receiver terminals in the network and the identification information of the relay nodes in the network.

In some embodiments, transmitting, by the first terminal, the target data using the different spatial filters over the different relay nodes includes: determining, by the first terminal, the relay nodes used for transmitting the target data based on the spatial filters used by the target data and a second mapping relationship, wherein the second mapping relationship is a mapping relationship between the spatial filters and the relay nodes.

In some embodiments, the relay node 600 further includes: a communication unit, configured to transmit second configuration information to the first terminal, wherein the second configuration information is used to configure change information of a connection of the first terminal.

In some embodiments, the change information of the connection of the first terminal includes at least one of: release of connections between the first terminal and one or more relay nodes; or addition of connections between the first terminal and the one or more relay nodes.

In some embodiments, the relay node 600 further includes: a communication unit, configured to receive a first request message from the first terminal, wherein the first request message is used to request establishment of a connection between the first terminal and a second terminal.

In some embodiments, the first request message includes identification information of the second terminal in the network.

In some embodiments, the relay node 600 further includes: a communication unit, configured to transmit, in a case where the relay node is connected to the second terminal, a first response message to the first terminal, wherein the first response message indicates information of a connection between the relay node and the second terminal.

In some embodiments, the relay node 600 further includes: a communication unit, configured to transmit, in a case where the relay node is not connected to the second terminal, a second request message to another relay node connected to the relay node, wherein the second request message includes identification information of the second terminal in a gateway network; and the relay node receives a second response message replied by the another relay node, where the second response message indicates information of a connection between the another relay node and the second terminal.

In some embodiments, the second response message further includes at least one of: a hop count from the another relay node to the second terminal; link quality information of the connection between the another relay node and the second terminal; or identification information of a relay node traversed from the another relay node to the second terminal.

In some embodiments, the relay node 600 further includes: a communication unit, configured to transmit a first response message to the first terminal, wherein the first response message indicates information of the connection between the relay node and the second terminal.

In some embodiments, the first response message further includes at least one of: a hop count from the relay node to the second terminal; link quality information of a unicast connection between the relay node and the second terminal; or identification information of a relay node traversed from the relay node to the second terminal.

In some embodiments, the relay node 600 further includes: a communication unit, configured to transmit first information to the first terminal, wherein the first information is used to configure a usage condition for an available connection.

In some embodiments, the first information is used to configure at least one of: a maximum quantity of connections available to the first terminal; a link quality threshold for the connections available to the first terminal; or a maximum hop count available for communication by the first terminal.

In some embodiments, in the network, one relay node corresponds to one piece of identification information.

In some embodiments, the identification information of the relay node is assigned by OAM entity, or assigned by a third-party decision entity, or assigned by a relay management node.

In some embodiments, in the network, the relay node is configured to establish at least N direct connections, and the direct connections are direct connections between the relay nodes.

In some embodiments, the processing unit 610 is further configured to detect presence of a neighbor relay node by transmitting a discovery message and/or receiving a discovery message.

In some embodiments, the discovery message includes at least one of: identification information of a relay node; a quantity of established direct connections between the relay node and other relay nodes; or identification information of a peer relay node corresponding to the established direct connections between the relay node and the other relay nodes.

In some embodiments, the processing unit 610 is further configured to determine, based on received discovery messages of the other relay nodes, whether to establish direct connections with the other relay nodes.

In some embodiments, the communication unit is a communication interface or a transceiver, or an input-output interface of a communication chip or system on a chip. The processing unit is one or more processors.

It should be understood that the terminal device 600 according to the embodiments of the present disclosure corresponds to the target relay node or the first relay node in the method embodiments of the present disclosure, and the above and other operations and/or functions of the units in the network device 600 are separately for implementing corresponding processes of the target relay node or the first relay node in the method embodiments illustrated in FIG. 3 to FIG. 5. For brevity, details are not repeated herein any further.

FIG. 8 is a schematic structural diagram of a communication device 700 according to some embodiments of the present disclosure. The communication device 700 illustrated in FIG. 8 includes a processor 710. The processor 710, when loading and running one or more computer programs from a memory, is caused to perform the methods in the embodiments of the present disclosure.

In some embodiments, as illustrated in FIG. 8, the communication device 700 further includes a memory 720. The processor 710, when loading and running the one or more computer programs from the memory 720, is caused to perform the method in the embodiments of the present disclosure.

The memory 720 is a separate device independent from the processor 710 or the memory 720 is integrated within the processor 710.

In some embodiments, as illustrated in FIG. 9, the communication device 700 further includes a transceiver 730. The processor 710 controls the transceiver 730 to communicate with other devices. Specifically, the processor 710 controls the transceiver 730 to transmit information or data to other devices, or the processor 710 controls the transceiver 730 to receive information or data from other devices.

The transceiver 730 includes a transmitter and a receiver. The transceiver 730 further includes one or more antennas.

In some embodiments, the communication device 700 serves as the first terminal in the embodiments of the present disclosure. Additionally, the communication device 700 performs the corresponding processes performed by the first terminal in various methods of the embodiments of the present disclosure. For brevity, details are not repeated herein any further.

In some embodiments, the communication device 700 is specifically the target relay node or the first relay node in the embodiments of the present disclosure, and the communication device 700 performs the corresponding processes performed by the target relay node or the first relay node in various methods in the embodiments of the present disclosure. For brevity, details are not repeated herein any further.

FIG. 9 is a schematic structural diagram of a chip according to some embodiments of the present disclosure. The chip 800 illustrated in FIG. 9 includes a processor 810. The processor 810, when loading and running one or more computer programs from a memory, is caused to perform the method in the embodiments of the present disclosure.

In some embodiments, as illustrated in FIG. 9, the chip 800 further includes a memory 820. The processor 810, when loading and running the one or more computer programs from the memory 820, is caused to perform the method in the embodiments of the present disclosure.

The memory 820 is a separate device independent from the processor 810, or the memory 820 is integrated within the processor 810.

In some embodiments, the chip 800 further includes an input interface 830. The processor 810 controls the input interface 830 to communicate with other devices or chips, specifically, the processor 810 controls the input interface 830 to acquire information or data from other devices or chips.

In some embodiments, the chip 800 further includes an output interface 840. The processor 810 controls the output interface 840 to communicate with other devices or chips, specifically, the processor 810 controls the output interface 840 to output information or data to other devices or chips.

In some embodiments, the chip is applicable to the target relay node or the first relay node in the embodiments of the present disclosure, and the chip performs corresponding processes performed by the target relay node or the first relay node in various methods in the embodiments of the present disclosure. For brevity, details are not repeated herein any further.

In some embodiments, the chip is applicable to the first terminal in the embodiments of the present disclosure. Additionally, the chip performs the corresponding processes performed by the first terminal in various methods of the embodiments of the present disclosure. For brevity, details are not repeated herein any further.

It should be understood that the chip mentioned in the embodiments of the present disclosure is also referred to as system-on-chip, system chip, chip system, or on-chip system.

FIG. 10 is a schematic block diagram of a communication system 900 according to some embodiments of the present disclosure. As illustrated in FIG. 10, the communication system 900 includes a terminal device 910 and a relay node 920.

The terminal device 910 is configured to perform the corresponding functions performed by the terminal device in the aforementioned methods, and the relay node 920 is configured to perform the corresponding functions performed by the relay node in the aforementioned methods. For brevity, details are not repeated herein any further.

It should be understood that the processor in the embodiments of the present disclosure is an integrated circuit chip with a signal processing capability. In the implementations, the processes in the embodiments of the method are achieved by integrated logic circuits of hardware in the processor or instructions in the software form. The above processor is a general processor, a digital signal processor (DSP), an application specific integrated circuit (ASIC), a field-programmable gate array (FPGA), other programmable logic devices, discrete gates, transistor logic devices, or discrete hardware assemblies that can achieve or perform various methods, processes, and logic blocks according to the embodiments of the present disclosure. The general processor is a microprocessor, any conventional processor, or the like. The processes in conjunction with the method in the embodiments of the present disclosure are directly embodied as a hardware decoding processor for processing or are performed by a combination of hardware and software modules in the decoding processor. The software modules are disposed in a random access memory (RAM), a flash memory, a read-only memory (ROM), a programmable ROM (PROM), an electrically erasable PROM (EPROM), a register, and other storage mediums mature in the field. The storage medium is disposed in the memory, and the processor reads the information in the memory and combines with its hardware to perform the processes of the above method.

It should be understood that the memory in embodiments of the present disclosure is a volatile or non-volatile memory, or includes both the volatile memory and the non-volatile memory. The non-volatile memory is a ROM, a PROM, an EPROM, an electrically EPROM (EEPROM), or a flash memory. The volatile memory is a RAM used as an external buffer. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). It should be noted that the system and the memory described herein are intended to include, but not limit to these and any other suitable type of memory.

It should be understood that the above memory are exemplary but not for limitation. For example, the memory in the embodiments of the present disclosure is also an SRAM, a DRAM, an SDRAM, a DDR SDRAM, an ESDRAM, an SLDRAM, a DR RAM, or the like. That is, the memory in the embodiments of the present disclosure is intend to include, but not limit to these and any other suitable type of memory.

Embodiments of the present disclosure further provide a computer-readable storage medium for storing one or more computer programs.

In some embodiments, the computer-readable storage medium is applicable to the first terminal in the embodiments of the present disclosure, and the one or more computer programs cause the computer to perform the corresponding processes performed by the first terminal in the method according to the embodiments of the present disclosure, which are not described herein for brevity.

In some embodiments, the computer-readable storage medium is applicable to the target relay node or first relay node in the embodiments of the present disclosure, and the one or more computer programs cause the computer to perform the corresponding processes performed by of the target relay node or first relay node in the method according to the embodiments of the present disclosure, which are not described herein for brevity.

Embodiments of the present disclosure further provide a computer program product including one or more computer program instructions.

In some embodiments, the computer program product is applicable to the target relay node or first relay node in the embodiments of the present disclosure, and the one or more computer program instructions, when loaded and executed by a computer, cause the computer to achieve the corresponding processes performed by the target relay node or first relay node in the method according to the embodiments of the present disclosure, which are not described herein for brevity.

In some embodiments, the computer program product is applicable to the first terminal in the embodiments of the present disclosure, and the one or more computer program instructions, when loaded and executed by a computer, cause the computer to perform the corresponding processes performed by the first terminal in the method according to the embodiments of the present disclosure, which are not described herein for brevity.

Embodiments of the present disclosure further provide a computer program.

In some embodiments, the computer program is applicable to the target relay node or first relay node in the embodiments of the present disclosure, and the computer program, when loaded and run on a computer, causes the computer to perform the corresponding processes performed by the target relay node or first relay node in the method according to the embodiments of the present disclosure, which are not described herein for brevity.

In some embodiments, the computer program is applicable to the first terminal in the embodiments of the present disclosure, and the computer program, when loaded and run on a computer, causes the computer to perform the corresponding processes performed by the first terminal in the method according to the embodiments of the present disclosure, which are not described herein for brevity.

It can be understood by those of ordinary skill in the art that the units and algorithmic processes of the examples described in conjunction with the embodiments disclosed herein can be achieved by the electronic hardware, or by a combination of the computer software and the electronic hardware. Whether these functions are implemented by the hardware or the software depends on the specific application and design constraints of the technical solution. For each application, those skilled in the art may use different methods to achieve the described functions, and such implementations should not be considered beyond the scope of the present disclosure.

It can be understood by those skilled in the art that for the specific operation processes of the system, device, and unit described above, reference may be made to the corresponding processes in the above embodiments of the method for convenience and simplicity of description, which are not described herein.

In the embodiments of the present disclosure, it should be understood that the systems, devices, and methods can be implemented in other ways. For example, the above embodiments of the device are only exemplary. For example, the division of the units is only the logical function division, and the actual implementation may have another division. For example, several units or assemblies can be combined or integrated into another system, or some features can be ignored or not performed. In addition, the coupling, the direct coupling, or the communication connection between each other may be achieved by some interfaces, and an indirect coupling or communication connection between devices or units may be electrical, mechanical or in other form.

The units described as separate parts may or may not be physically separate, and the parts shown as the units may or may not be physical units. That is, the parts may be disposed in one place, or distributed in several network units. Some or all of the units can be selected according to actual needs to achieve the purpose of the technical solutions according to the embodiments.

In addition, the functional units in the embodiments of the present disclosure may be integrated in a processing unit or exist physically separately, or two or more units may be integrated in a unit.

In a case where the functions are achieved in the form of software functional units and sold or used as stand-alone products, the functions may be stored in a computer readable storage medium. Based on the understanding, the nature of the technical solutions of the present disclosure, the part contributed to the prior art, or the part of the technical solutions may be embodied in the form of a software product, and the software product is stored in a storage medium and includes a number of instructions for causing a computer device (which may be a personal computer, a server, a network equipment, or the like) to perform all or part of the processes of the method in various embodiments of the present disclosure. The above storage medium include: a U disk, a mobile hard disk, a ROM, a RAM, a disk, a disc, or other medium that can store program codes.

Described above are merely specific embodiments of the present disclosure, and the scope of protection of the present disclosure is not limited. Any changes or replacements made within the technical scope of the present disclosure by those skilled in the art should be encompassed within the scope of protection of the present disclosure. thus, the scope of protection of the present disclosure shall prevail in the scope of protection of the claims.

## Claims

1. A method for wireless communication, applicable to a first terminal, the method comprising:
selecting a target relay node from at least one relay node, wherein the at least one relay node is at least a portion of relay nodes deployed in a network, the relay nodes deployed in the network being configured to communicate with each other over direct connections or relay-based connections; and
establishing a connection between the first terminal and the target relay node.

2. The method according to claim 1, further comprising:
receiving at least one discovery message from the at least one relay node; and
determining the target relay node in the at least one relay node based on at least one discovery message received from the at least one relay node.

3. The method according to claim 2, wherein the at least one discovery message comprises identification information of the at least one relay node in the network.

4. The method according to claim 3, wherein in the network, one relay node corresponds to one piece of identification information, wherein the identification information identifies the relay node.

5. The method according to any one of claims 1 to 4, further comprising:
receiving first indication information from the target relay node, wherein the first indication information indicates identification information of the first terminal in the network.

6. The method according to claim 5, wherein the identification information of the first terminal in the network is assigned to the first terminal by the target relay node.

7. The method according to any one of claims 1 to 6, further comprising:
determining the connection between the first terminal and the target relay node as a primary connection.

8. The method according to any one of claims 1 to 7, further comprising:
reporting, to the target relay node, measurement reports of other relay nodes excluding the target relay node in the at least one relay node.

9. The method according to claim 8, wherein the measurement reports of the other relay nodes are acquired by measuring discovery messages from the other relay nodes.

10. The method according to any one of claims 1 to 9, further comprising:
receiving second indication information from the target relay node, wherein the second indication information indicates identification information of one or more relay nodes in the network; and
establishing connections between the first terminal and the one or more relay nodes.

11. The method according to claim 10, wherein establishing the connections between the first terminal and the one or more relay nodes comprises:
establishing the connections between the first terminal and the one or more relay nodes based on identification information of the first terminal in the network.

12. The method according to any one of claims 1 to 11, further comprising:
receiving first configuration information from the target relay node, wherein the first configuration information is used to configure a usage mode of an established connection of the first terminal.

13. The method according to claim 12, wherein the usage mode of the established connection of the first terminal comprises at least one of:
determining the connection between the first terminal and the target relay node as the primary connection; or
performing transmission by the first terminal using a plurality of relay nodes.

14. The method according to claim 13, wherein performing transmission by the first terminal using the plurality of relay nodes comprises at least one of:
transmitting initial transmission of target data and retransmission of the target data over different relay nodes;
transmitting target data to different receiver terminals over different relay nodes; or
transmitting target data using different spatial filters over different relay nodes.

15. The method according to claim 14, wherein transmitting the target data to the different receiver terminals over the different relay nodes comprises:
determining relay nodes used for transmitting the target data based on the receiver terminals of the target data and a first mapping relationship, wherein the first mapping relationship is a mapping relationship between identification information of the receiver terminals in the network and identification information of the relay nodes in the network.

16. The method according to claim 14 or 15, wherein transmitting the target data using the different spatial filters over the different relay nodes comprises:
determining the relay nodes used for transmitting the target data based on the spatial filters used by the target data and a second mapping relationship, wherein the second mapping relationship is a mapping relationship between the spatial filters and the relay nodes.

17. The method according to any one of claims 1 to 16, further comprising:
receiving second configuration information from the target relay node, wherein the second configuration information is used to configure change information of a connection of the first terminal.

18. The method according to claim 17, wherein the change information of the connection of the first terminal comprises:
release of connections between the first terminal and one or more relay nodes; or
addition of connections between the first terminal and the one or more relay nodes.

19. The method according to any one of claims 1 to 18, further comprising:
transmitting a first request message to a first relay node in a case where the first terminal needs to communicate with a second terminal, wherein the first request message is used to request establishment of a connection between the first terminal and the second terminal.

20. The method according to claim 19, wherein the first request message comprises identification information of the second terminal in the network.

21. The method according to claim 19 or 20, wherein the first relay node is the target relay node.

22. The method according to any one of claims 19 to 21, further comprising:
receiving a first response message from the first relay node, wherein the first response message indicates information of a connection between the first relay node and the second terminal.

23. The method according to claim 22, wherein the first response message further comprises at least one of:
a hop count from the first relay node to the second terminal;
link quality information of the connection between the first relay node and the second terminal; or
identification information of a relay node traversed from the first relay node to the second terminal.

24. The method according to claim 22 or 23, further comprising:
determining whether to communicate with the second terminal over a first connection based on first information and information carried in the first response message, wherein the first information is used to configure a usage condition for an available connection, and the first connection is a reachable connection between the first terminal and the second terminal determined using the first response message.

25. The method according to claim 24, wherein the first information is used to configure at least one of:
a maximum quantity of connections available to the first terminal;
a link quality threshold for the connections available to the first terminal; or
a maximum hop count available for communication by the first terminal.

26. The method according to claim 24 or 25, wherein the first information is preconfigured, or configured by a network device, or configured by the target relay node.

27. The method according to any one of claims 24 to 26, further comprising:
exchanging target information with the second terminal over the first connection, wherein the target information comprises identification information of a relay node traversed on the first connection.

28. The method according to claim 27, wherein the target information comprises at least one of configuration information or capability information.

29. A method for wireless communication, applicable to a target relay node, the method comprising:
establishing a connection between the target relay node and a first terminal, wherein the target relay node is one of relay nodes deployed in a network, the relay nodes deployed in the network being configured to communicate with each other over direct connections or relay-based connections.

30. The method according to claim 29, further comprising:
transmitting first indication information to the first terminal, wherein the first indication information indicates identification information of the first terminal in the network.

31. The method according to claim 30, wherein the identification information of the first terminal in the network is assigned to the first terminal by the target relay node.

32. The method according to any one of claims 29 to 31, further comprising:
receiving a measurement report of at least one relay node reported by the first terminal.

33. The method according to claim 32, wherein the measurement report of the at least one relay node is acquired by measuring at least one discovery message from the at least one relay node.

34. The method according to any one of claims 29 to 33, further comprising:
transmitting second indication information to the first terminal, wherein the second indication information indicates identification information of one or more relay nodes in the network.

35. The method according to claim 34, wherein the one or more relay nodes are selected by the target relay node based on the measurement report of the at least one relay node reported by the first terminal.

36. The method according to any one of claims 29 to 35, further comprising:
transmitting first configuration information to the first terminal, wherein the first configuration information is used to configure a usage mode of an established connection of the first terminal.

37. The method according to claim 36, wherein the usage mode of the established connection of the first terminal comprises at least one of:
determining the connection between the first terminal and the target relay node as a primary connection; or
performing transmission by the first terminal using a plurality of relay nodes.

38. The method according to claim 37, wherein performing transmission by the first terminal using the plurality of relay nodes comprises at least one of:
transmitting, by the first terminal, initial transmission of target data and retransmission of the target data over different relay nodes;
transmitting target data, by the first terminal, to different receiver terminals over different relay nodes; or
transmitting, by the first terminal, target data using different spatial filters over different relay nodes.

39. The method according to claim 38, wherein transmitting, by the first terminal, the target data to the different receiver terminals over the different relay nodes comprises:
determining, by the first terminal, relay nodes used for transmitting the target data based on the receiver terminals of the target data and a first mapping relationship, wherein the first mapping relationship is a mapping relationship between identification information of the receiver terminals in the network and identification information of the relay nodes in the network.

40. The method according to claim 38 or 39, wherein transmitting, by the first terminal, the target data using the different spatial filters over the different relay nodes comprises:
determining, by the first terminal, the relay nodes used for transmitting the target data based on the spatial filters used by the target data and a second mapping relationship, wherein the second mapping relationship is a mapping relationship between the spatial filters and the relay nodes.

41. The method according to any one of claims 29 to 40, further comprising:
transmitting second configuration information to the first terminal, wherein the second configuration information is used to configure change information of a connection of the first terminal.

42. The method according to claim 41, wherein the change information of the connection of the first terminal comprises at least one of:
release of connections between the first terminal and one or more relay nodes; or
addition of connections between the first terminal and the one or more relay nodes.

43. The method according to any one of claims 29 to 42, further comprising:
receiving a first request message from the first terminal, wherein the first request message is used to request establishment of a connection between the first terminal and a second terminal.

44. The method according to claim 43, wherein the first request message comprises identification information of the second terminal in the network.

45. The method according to claim 43 or 44, further comprising:
transmitting a first response message to the first terminal in a case where the target relay node is connected to the second terminal, wherein the first response message indicate information of a connection between the target relay node and the second terminal.

46. The method according to claim 43 or 44, further comprising:
transmitting a second request message to another relay node connected to the target relay node in a case where the target relay node is not connected to the second terminal, wherein the second request message comprises identification information of the second terminal in a gateway network; and
receiving a second response message from the another relay node, wherein the second response message indicates information of a connection between the another relay node and the second terminal.

47. The method according to claim 46, wherein the second response message further comprises at least one of:
a hop count from the another relay node to the second terminal;
link quality information of the connection between the another relay node and the second terminal; or
identification information of a relay node traversed from the another relay node to the second terminal.

48. The method according to claim 46 or 47, further comprising:
transmitting a first response message to the first terminal, wherein the first response message indicates information of a connection between the target relay node and the second terminal.

49. The method according to claim 45 or 48, wherein the first response message further comprises at least one of:
a hop count from the target relay node to the second terminal;
link quality information of a unicast connection between the target relay node and the second terminal; or
identification information of a relay node traversed from the target relay node to the second terminal.

50. The method according to any one of claims 29 to 49, further comprising:
transmitting first information to the first terminal, wherein the first information is used to configure a usage condition for an available connection.

51. The method according to claim 50, wherein the first information is used to configure at least one of:
a maximum quantity of connections available to the first terminal;
a link quality threshold for the connections available to the first terminal; or
a maximum hop count available for communication by the first terminal.

52. The method according to any one of claims 29 to 51, wherein in the network, one relay node corresponds to one piece of identification information.

53. The method according to claim 52, wherein the identification information of the target relay node is assigned by an operation, administration and maintenance (OAM) entity, or assigned by a third-party decision entity, or assigned by a relay management node.

54. The method according to any one of claims 29 to 53, wherein in the network, the relay nodes are configured to establish at least N direct connections, wherein the N direct connections are direct connections between the relay nodes.

55. The method according to any one of claims 29 to 54, further comprising:
detecting a neighbor relay node by transmitting a discovery message and/or receiving a discovery message.

56. The method according to claim 55, wherein the discovery message comprises at least one of:
identification information of a relay node;
a quantity of established direct connections between the relay node and other relay nodes; or
identification information of a peer relay node corresponding to the established direct connections between the relay node and the other relay nodes.

57. The method according to any one of claims 29 to 56, further comprising:
determining whether to establish direct connections with other relay nodes based on received discovery messages of the other relay nodes.

58. A terminal device, comprising:
a processing unit, configured to select a target relay node from at least one relay node, wherein the at least one relay node is at least a portion of relay nodes deployed in a network, the relay nodes deployed in the network being configured to communicate with each other over direct connections or relay-based connections; and establish a connection between the terminal device and the target relay node.

59. A relay node, comprising:
a processing unit, configured to establish a connection between the relay node and a first terminal, wherein the relay node is one of relay nodes deployed in a network, the relay nodes deployed in the network being configured to communicate with each other over direct connections or relay-based connections.

60. A terminal device, comprising a processor and a memory, wherein the memory is configured to store one or more computer programs, and the processor, when loading and running the one or more computer programs stored in the memory, is caused to perform the method as defined in any one of claims 1 to 28.

61. A relay node, comprising a processor and a memory, wherein the memory is configured to store one or more computer programs, and the processor, when loading and running the one or more computer programs stored in the memory, is caused to perform the method as defined in any one of claims 29 to 57.

62. A chip, comprising: a processor, wherein the processor, when loading and running one or more computer programs from a memory, causes a device equipped with the chip to perform the method as defined in any one of claims 1 to 28 or the method as defined in any one of claims 29 to 57.

63. A computer-readable storage medium configured to store one or more computer programs, wherein the one or more computer programs, when loaded and run by a computer, cause the computer to perform the method as defined in any one of claims 1 to 28 or the method as defined in any one of claims 29 to 57.

64. A computer program product comprising one or more computer program instructions, wherein the one or more computer program instructions, when loaded and executed by a computer, cause the computer to perform the method as defined in any one of claims 1 to 28 or the method as defined in any one of claims 29 to 57.

65. A computer program, wherein the computer program, when loaded and run by a computer, causes the computer to perform the method as defined in any one of claims 1 to 28 or the method as defined in any one of claims 29 to 57.
